# EUROPEAN PATENT SPECIFICATION

(11) **EP 2 628 781 B1**
(45) Date of publication and mention of the grant of the patent: **22.02.2023**
(21) Application number: 10858430.1
(22) Date of filing: 11.10.2010
(51) Int. Cl.: C10L 1/08, C10G 3/00, C10G 47/00

(54) **METHOD FOR PRODUCING BIODIESEL**
VERFAHREN ZUR HERSTELLUNG VON BIODIESEL
PROCÉDÉ DE FABRICATION DE BIODIESEL

(43) Date of publication of application: 21.08.2013
(73) Proprietor: SK Innovation Co., Ltd., Seoul 110-110 (KR); SK Energy Co., Ltd., Seoul 110-110 (KR)
(72) Inventor: JU, Sang Jun, Busan 617-755 (KR); JEON, Hee Jung, Daejeon 305-370 (KR); PARK, Joong Min, Seoul 140-100 (KR); JEONG, Il Yong, Seoul 157-031 (KR); KIM, Gyung Rok, Daejeon 305-761 (KR); KANG, Sin Young, Daejeon 305-761 (KR); RYU, Jae Wook, Daejeon 305-728 (KR); LEE, Sang Il, Daejeon 305-509 (KR); KIM, Do Woan, Daejeon 305-509 (KR)
(74) Representative: Mathys & Squire
(86) International application number: PCT/KR2010/006927
(87) International publication number: WO 2012/050243

(56) References cited:
- WO-A1-2008/109877
- WO-A2-2008/103204
- JP-A- 2002 059 118
- US-A1- 2007 010 682
- US-A1- 2009 069 610
- US-A1- 2009 090 046

## Description

### Technical Field

The present invention relates to a method of converting biomass into biodiesel and, more particularly, to a method of producing biodiesel including a hydrotreating process.

### Background Art

Due to rising oil prices, there is a global demand for the development of alternative energy resources and reduction of greenhouse gases, and thus, development of bioenergy resources is actively ongoing. Furthermore, as the domestic and foreign biodiesel supply is increased depending on the taxation and legislation systems all over the world, bioenergy related markets are rapidly growing by 8 - 12% per year.

A typical example of technology for manufacturing diesel oil from biomass includes production of FAME (Fatty Acid Methyl Ester). FAME is advantageous because it is alternative energy obtained from biomass and, in terms of properties, has a higher cetane value than diesel oil obtained from conventional mineral oil, but it is problematic because of its low oxidation stability and high production cost.

Proposed as the next-generation technology is HBD (Hydrotreated biodiesel) obtained by directly hydrotreating triglyceride via a hydrotreating reaction. HBD has a higher production cost than diesel obtained from conventional mineral oil, but has comparatively high oxidation stability due to the hydrotreating process, compared to conventional FAME.

Furthermore, high-grade diesel oil having a cetane value of about 100 may be produced. Moreover, HBD is excellent in terms of energy efficiency and reduction of greenhouse gases, compared to mineral oil or FAME.

Production of HBD is largely divided into two types of process. One of them is a process composed exclusively of a hydrotreating process, and the other is a process including an isomerization process following a hydrotreating process.

In HBD, hydrotreating refers to a process of hydrogenating fat or fatty acid via a hydrotreating reaction, and similar terms thereof include hydrogenation, deoxygenation, hydrodeoxygenation, decarboxylation, and decarbonylation, terms which may be used together. Particularly, the terms decarboxylation and decarbonylation are used as the terms most similar to the hydrotreating reaction in HBD production because hydrogenation occurs while one carbon is removed from the fat or fatty acid of a feed.

Typically, vegetable oil used as a feed for producing biodiesel is composed of triglyceride. When ester form in triglyceride is hydrotreated, a C15-C18 paraffin material may be obtained, the boiling point of which corresponds to a diesel range, and this material may be used as biodiesel.

A conventional method of hydrotreating triglyceride has a high reaction rate. Accordingly, instantaneous high heat is generated, undesirably and remarkably shortening the lifetime of a catalyst and causing problems related to process stability. Also, hydrogen should be consumed in an amount equal to or higher than that used in a hydrocracking process.

In regard to conventional HBD production techniques, US 4,992,605 discloses a process of producing biodiesel from crude palm oil in the presence of a commercially available hydrotreating catalyst comprising CoMo, NiMo, or transition metal.

US 2007/0175795 discloses a method of directly hydrotreating triglyceride.

US 7,232,935 discloses a catalytic process for producing HBD from vegetable oil by sequentially performing isomerization following hydrotreating.

US 7,279,018 discloses preparation of a product by mixing hydrotreated and isomerized HBD with about 0 - 20% of an antioxidant.

US 2007/0010682 discloses a production process comprising hydrotreating and isomerization wherein a feed contains 5 wt% or more of free fatty acid and a diluent, the ratio of the diluent to the feed being 5 - 30 : 1.

As mentioned above, currently available methods of producing HBD include direct hydrotreating of triglyceride, which is problematic because of high hydrogen consumption and heat generation.

### Disclosure

### Technical Problem

Accordingly, the present invention has been made keeping in mind the above problems occurring in the related art, and an object of the present invention is to provide a novel method of producing HBD, wherein hydrolysis and recycling of hydrotreated biomass may be further added to a typical HBD production process, thus enabling the same hydrotreating process to be performed using hydrogen in an amount much lower than that required for a typical hydrotreating process of HBD and enabling control of a high heat generation.

### Technical Solution

In order to accomplish the above object, the present invention provides a method of producing biodiesel, comprising:i) hydrolyzing biomass using a solid acid catalyst at 110 - 150°C;ii) hydrotreating the hydrolyzed biomass to form hydrotreated biomass containing n-paraffin; and iii) recycling the hydrotreated biomass containing n-paraffin to any one or more selected from among prior to i) and during ii),wherein i) is performed using two or more hydrolysis reactors, and includes washing the catalyst using the hydrotreated biomass containing n-paraffin recycled from iii) in the other hydrolysis reactor, while hydrolyzing the biomass in one hydrolysis reactor wherein ii) hydrotreating is gas-phase deoxygenation or liquid-phase deoxygenation in a hydrocarbon solvent.

Also, in another embodiment of the present invention, the washing the catalyst using the hydrotreated biomass recycled from iii) in the other hydrolysis reactor are repetitively performed.

In another embodiment of the present invention, the method may further comprise feeding the hydrogen by subjecting a product obtained in i) into a hydrothermal reaction and the hydrogen produced in the hydrothermal reaction into ii).

Also, in another embodiment of the present invention, the method may further comprise separately separating lactic acid produced in the hydrothermal reaction.

Also, in another embodiment of the present invention, the hydrothermal reaction is performed at 280-330°C.

### Advantageous Effects

When using the method according to the present invention, process efficiency can be greatly improved and high stability can be ensured, and the amount of hydrogen consumed in a hydrotreating reaction can be reduced by about 30% and the generation of heat can be reduced by about 50%.

Also, because two or more hydrolysis reactors are alternately used, problems that the deterioration of catalytic activity by adsorbing an intermediate product into pores of catalyst can be solved.

### Description of Drawing

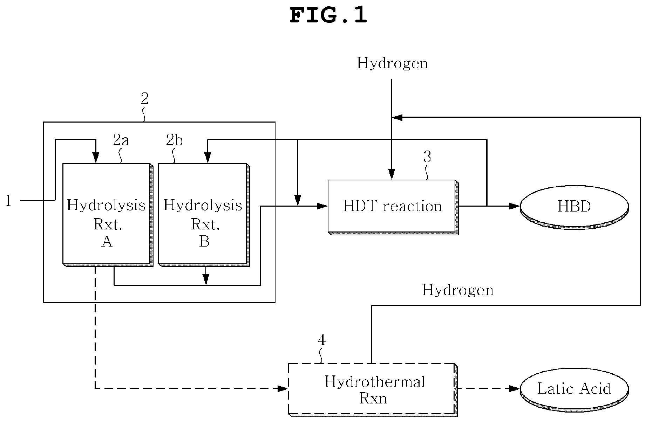

FIG. 1 illustrates a schematic flow of a process according to the present invention.

### <Description of the Reference Numerals in the Drawing>

| | |
|---|---|
| 1: biomass | 2: hydrolysis reaction |
| 2a: first hydrolysis reactor | |
| 2b: second hydrolysis reactor | |
| 3: hydrotreating | 4: hydrothermal reaction |

### Best Mode

According to embodiments of the present invention, biomass is introduced into a first hydrolysis reactor 2a so that it is hydrolyzed in the presence of a catalyst, and the resulting first product is fed into a hydrotreating process which will be described below. When performance of the catalyst deteriorates due to an intermediate product becoming attached to the catalyst of the first hydrolysis reactor, the route of feeding the biomass into the first hydrolysis reactor 2a is changed in such a way that the biomass is fed into a second hydrolysis reactor 2b, thus performing continuous hydrolysis.

To the first hydrolysis reactor in which the performance of the catalyst has deteriorated, the second product resulting from the following hydrotreating process is recycled and fed. The recycled second product functions to wash the intermediate product attached to the catalyst of the first hydrolysis reactor 2a so as to restore catalytic activity. Also, the recycled second product is fed into the hydrotreating process along with the first product subjected to hydrolysis in the second hydrolysis reactor 2b. Thereby, fatty acid of the first product fed into the hydrotreating process may be diluted.

When the activity of the catalyst of the second hydrolysis reactor 2b deteriorates after a predetermined period of time, the biomass is fed again into the first hydrolysis reactor 2a in which the catalyst bed is washed, and the recycled second product is fed into the second hydrolysis reactor 2b so as to wash the catalyst.

Alternate use of the hydrolysis reactors may be adjusted by observing a differential pressure of the reactors because a continuous increase in the differential pressure means that the intermediate product is attached to the catalyst to thus deteriorate the catalytic activity. Also, the alternating frequency may be adjusted depending on the time.

By alternately using the hydrolysis reactors and recycling the second product, problems of deteriorated catalytic activity may be solved, and the reaction may continue without interruption of the process, and additional processes required in conventional methods may be obviated.

The first product is subjected to a hydrotreating process 3 after the hydrolysis 2. The product containing fatty acid is formed into a second product containing n-paraffin.

The hydrotreating process of the invention is either a gas-phase or a liquid-phase deoxygenation in a hydrocarbon solvent. Examples of the catalyst used in the hydrotreating process may include a precious metal such as palladium, platinum, etc., and NiMo, CoMo, etc., and a metal phosphorus compound based catalyst may be used, but the present invention is not limited thereto.

A portion of the second product obtained in the hydrotreating process may be recycled to any one or more selected from among the hydrolysis process 2 and the hydrotreating process 3.

As mentioned in the above hydrolysis process, in the case where the second product is recycled to the hydrolysis process 2, washing may be performed to prevent deterioration of the catalytic performance. Also, the total process efficiency may be increased and high process stability may be ensured, by virtue of recycling.

In the case where the second product is recycled to the hydrotreating process, the extent of generation of heat in the hydrotreating reaction may be decreased. Furthermore, the concentration of fatty acid which may cause the corrosion of the reactor could be lowered, and thus the exposing of a material to severe corrosion environments may be controlled.

According to another embodiment of the present invention, the method may further include separating glycerin from the first product obtained in the hydrolysis process 2 so that glycerin is subjected to a hydrothermal reaction 4. The hydrothermal reaction may be carried out at about 270 - 320°C. The glycerin produced upon hydrolysis produces hydrogen and lactic acid via the hydrothermal reaction. As such, the produced hydrogen may be used to partially supplement hydrogen required for the hydrotreating process.

According to the present invention, when triglyceride primarily introduced into the hydrolysis process is supposed to be 1 mol, hydrogen required for the hydrotreating process is about 6 mol, and hydrogen produced in the hydrothermal reaction of glycerin is about 1 mol, and therefore, a considerably large amount of required hydrogen may be obtained from the hydrothermal reaction of glycerin.

Hydrogen required for the hydrotreating process may be supplemented via such a reaction, and high-value-added products of lactic acid may be simultaneously produced.

### Mode for Invention

The present invention is described in detail with reference to the appended drawing, but is not limited thereto.

The present inventors have discovered that, in the conventional HBD production process via direct hydrotreating of triglyceride, conversion of triglyceride into fatty acid requires 1/3 of the total hydrogen consumption and generates heat corresponding to 1/2 of the total reaction temperature increase, and thus have devised the addition of hydrolysis before the hydrotreating process, thus culminating in the present invention.

FIG. 1 illustrates a schematic process flow according to the present invention.

Specifically, biomass 1 is introduced into a hydrolysis process 2. The biomass fed into the hydrolysis reactor is hydrolyzed using a catalyst. The triglyceride of the biomass is produced into a first product containing fatty acid and glycerin via the hydrolysis reaction. The biomass may include vegetable oil, vegetable fat, animal fat, fish oil, recycled fat, vegetable fatty acid, animal fatty acid, or mixtures thereof. Also, the catalyst used in the hydrolysis reaction is a solid acid catalyst. Examples of the solid acid catalyst may include silica alumina • zeolite, etc., and also, a strong acidic catalyst like as the aluminum oxide prepared by adding the halogen such as fluorine or chlorine, but the present invention is not limited thereto.

A typical hydrolysis process requires reaction conditions of about 250°C and 30 - 50 kg/cm²g, thus consuming a large amount of energy. Furthermore, as fatty acid is produced under conditions of high temperature and high pressure, a material having high corrosion resistance should be used. However, in the present invention, a solid acid catalyst such as a resin is used, and thus the hydrolysis reaction may be carried out at 110 - 150°C under atmospheric pressure.

Also, in the hydrolysis reaction, there may occur problems in which the activity of the catalyst may remarkably deteriorate because the intermediate adsorbed to pore of catalyst hinder the feed to contact the catalyst active site.

In this case, with the goal of solving the problems of deteriorated catalytic activity, a recycling process including methanol washing or burning of the catalyst in air is typically required to restore the activity.

However, in the embodiment of the invention, two or more hydrolysis reactors are used and alternately operated, thereby easily solving such problems. Specifically, in the case where two hydrolysis reactors are used, the biomass is hydrolyzed in one hydrolysis reactor, and the catalyst is washed using the second product subjected to the hydrotreating process 3 in the other hydrolysis reactor, thereby maintaining the activity of the catalyst.

## Claims

1. A method of producing biodiesel, comprising:
i) hydrolyzing biomass using a solid acid catalyst at 110 - 150°C; under atmospheric pressure
ii) hydrotreating the hydrolyzed biomass to form hydrotreated biomass containing n-paraffin; and
iii) recycling the hydrotreated biomass containing n-paraffin to any one or more selected from among prior to i) and during ii),
wherein i) is performed using two or more hydrolysis reactors, and includes washing the catalyst using the hydrotreated biomass containing n-paraffin recycled from iii) in the other hydrolysis reactor, while hydrolyzing the biomass in one hydrolysis reactor
wherein ii) hydrotreating is gas-phase deoxygenation or liquid-phase deoxygenation in a hydrocarbon solvent.

2. The method of claim 1, wherein the washing the catalyst using the hydrotreated biomass recycled from iii) in the other hydrolysis reactor are repetitively performed.

3. The method of claim 1 or 2, further comprising feeding the hydrogen by subjecting a product obtained in i) into a hydrothermal reaction and the hydrogen produced in the hydrothermal reaction into ii).

4. The method of claim 3, further comprising separately separating lactic acid produced in the hydrothermal reaction.

5. The method of claim 3, wherein the hydrothermal reaction is performed at 280 - 330°C.

## Patentansprüche

1. Verfahren zur Herstellung von Biodiesel, das Folgendes beinhaltet:
(i) Hydrolysieren von Biomasse unter Verwendung eines festen sauren Katalysators bei 110 - 150°C unter atmosphärischem Druck;
(ii) Hydrobehandeln der hydrolysierten Biomasse zur Bildung von hydrobehandelter Biomasse, die n-Paraffin enthält; und
(iii) Rezyklieren der hydrierten, n-Paraffin enthaltenden Biomasse zu einem oder mehreren aus der Gruppe vor i) und während ii) ausgewählten Verfahren,
wobei i) mit Hilfe von zwei oder mehr Hydrolysereaktoren durchgeführt wird und das Waschen des Katalysators mit der aus iii) rezyklierten hydrobehandelten, n-Paraffin enthaltenden Biomasse in dem anderen Hydrolysereaktor beinhaltet, während die Biomasse in einem Hydrolysereaktor hydrolysiert wird;
wobei ii) das Hydrobehandeln Gasphasen-Desoxygenierung oder Flüssigphasen-Desoxygenierung in einem Kohlenwasserstofflösungsmittel ist.

2. Verfahren nach Anspruch 1, wobei das Waschen des Katalysators unter Verwendung der aus iii) in den anderen Hydrolysereaktor rezyklierten hydrobehandelten Biomasse wiederholt durchgeführt wird.

3. Verfahren nach Anspruch 1 oder 2, das ferner das Zuführen des Wasserstoffs durch Unterziehen eines in i) erhaltenen Produkts einer hydrothermalen Reaktion und des in der hydrothermalen Reaktion erzeugten Wasserstoffs zu ii) beinhaltet.

4. Verfahren nach Anspruch 3, das ferner das getrennte Abtrennen der in der hydrothermalen Reaktion erzeugten Milchsäure beinhaltet.

5. Verfahren nach Anspruch 3, wobei die hydrothermale Reaktion bei 280 - 330°C durchgeführt wird.

## Revendications

1. Procédé de production de biodiesel, comprenant :
i) l'hydrolyse de biomasse en utilisant un catalyseur acide solide à une température allant de 110 à 150 °C à la pression atmosphérique ;
ii) l'hydrotraitement de la biomasse hydrolysée pour former une biomasse hydrotraitée contenant de la n-paraffine ; et
iii) le recyclage de la biomasse hydrotraitée contenant de la n-paraffine vers une ou plusieurs étapes choisies parmi avant i) et pendant ii)
dans lequel i) est réalisée en utilisant deux réacteurs d'hydrolyse ou plus, et inclut le lavage du catalyseur en utilisant la biomasse hydrotraitée contenant de la n-paraffine recyclée de iii) dans l'autre réacteur d'hydrolyse, pendant l'hydrolyse de la biomasse dans un réacteur d'hydrolyse
dans lequel l'hydrotraitement ii) est une désoxygénation en phase gazeuse ou une désoxygénation en phase liquide dans un solvant d'hydrocarbure.

2. Procédé selon la revendication 1, dans lequel le lavage du catalyseur en utilisant la biomasse hydrotraitée recyclée de iii) dans l'autre réacteur d'hydrolyse est réalisé de manière répétée.

3. Procédé selon la revendication 1 ou 2, comprenant en outre l'apport de l'hydrogène en soumettant un produit obtenu dans i) à une réaction hydrothermale et l'hydrogène produit dans la réaction hydrothermale à ii).

4. Procédé selon la revendication 3, comprenant en outre la séparation séparément de l'acide lactique produit dans la réaction hydrothermale.

5. Procédé selon la revendication 3, dans lequel la réaction hydrothermale est réalisée à une température allant de 280 à 330 °C.
